# EUROPÄISCHE PATENTSCHRIFT

(11) **EP 0 365 827 B1**
(45) Veröffentlichungstag und Bekanntmachung des Hinweises auf die Patenterteilung: **12.01.1994**
(21) Anmeldenummer: 89117450.0
(22) Anmeldetag: 21.09.1989
(51) Int. Cl.: B01L 9/06, G01N 35/04

(54) **Vorrichtung zur Aufnahme für mehrere Probengefässe zur Durchführung von Strahlungsmessungen**
Device for holding a plurality of sample containers for carrying out radiation measurements
Dispositif de réception pour plusieurs récipients d'échantillons en vue de mesures radiométriques

(30) Priorität: 24.10.1988 DE 3836163
(43) Veröffentlichungstag der Anmeldung: 02.05.1990
(73) Patentinhaber: LABORATORIUM PROF. DR. RUDOLF BERTHOLD GmbH & Co. KG, 75323 Bad Wildbad (DE)
(72) Erfinder: Berthold, Fritz, Dr., D-7530 Pforzheim (DE); Lohr, Willy, D-7547 Wildbad (DE)
(74) Vertreter: Frank, Gerhard, Dipl.-Phys.

(56) Entgegenhaltungen:
- EP-A- 0 219 802
- FR-A- 2 601 452
- US-A- 4 055 396
- US-A- 4 141 444

## Beschreibung

Strahlungsmessungen, wie beispielsweise Chemi- oder Biolumineszenzmessungen haben insbesondere auch im medizinischen Bereich eine erhebliche Bedeutung gewonnen zur Entdeckung bzw. Identifizierung von bestimmten Substanzen. Man bedient sich hierzu spezieller Verfahren (Immuno-Assays), die darauf beruhen, daß jeder dieser Substanzen (Antigen, beispielsweise körpereigene Hormone oder auch krankheitserregende Mikroorganismen) ein spezifischer Antikörper zugeordnet werden kann, der als körpereigener Immunstoff vorliegen kann, aber auch künstlich erzeugt werden kann. Ein solcher spezifischer Antikörper bildet mit dem (nachzuweisenden) Antigen einen Komplex; wird der Antikörper seinerseits mit einer nachweisbaren Markierung (label) versehen, so kann über den Nachweis dieser Markierung das Vorliegen des betreffenden Antigens nachgewiesen werden. Der markierte Antikörper dient also praktisch als Meßsonde. Abhängig von Art und Struktur des Antigens und des zugeordneten Antikörpers sind verschiedene Immuno-Assays entwickelt worden, die sich in der Herstellung des derart markierten Antigen-Antikörper Komplexes unterscheiden; so kann man immunometrische Assays (beispielsweise zum Nachweis des TSH-Antigens), bei denen das nachzuweisende Antigen zunächst an den zugehörigen nicht markierten Antikörper angekoppelt wird und danach der zugehörige markierte Antikörper wiederum an das Antigen ankoppelt, so daß eine Sandwich-Struktur gebildet wird, mit der Folge, daß die Anzahl der Markierungen etwa proportional zur Anzahl der vorhandenen, nachzuweisenden Antigene ist.

Im Gegensatz hierzu stehen kompetitive Assays, bei denen die nachzuweisenden Antigene in Konkurrenz zu markierten Antigen an eine beschränkte Anzahl von Antikörpern ankoppeln; hieraus resultiert letztlich, daß die Anzahl der Markierungen mit der Anzahl der nachzuweisenden Antigene abnimmt.

In jüngerer Zeit werden zur Markierung zunehmend nicht-radioaktive Substanzen verwendet, die zur Lumineszenz angeregt werden können, beispielsweise Acridinium-Ester-Moleküle, bei denen in Anwesenheit von Wasserstoffperoxid in alkalischer Lösung eine exotherme Reaktion initiiert wird, deren thermische Energie zunächst zur Bildung von angeregten Molekülzuständen führt; aus diesen angeregten Quantenzuständen gehen die Moleküle dann (gegebenenfalls unter Zwischenstationen) wieder in ihren Grundzustand über, wobei die Energiedifferenz zwischen den Quantenzuständen in Form von Photonen freigesetzt wird, die dann letztlich mit Hilfe eines Fotomultipliers nachgewiesen werden können.

Wird ein solches label bei Immuno-Assays verwendet, spricht man folglich von Chemilumineszenz Immunoassays. Grundlagen und Einzelheiten zu diesen sind beispielsweise dargestellt in "Journal of Clinical Immunoassays", Vol.7, Nr. 1, 1984, Seiten 82 ff oder auch "Methods of Enzymology", Volume 133, Part B, Seiten 366 ff.

Allen diesen Immunoassays ist gemeinsam, daß zu ihrer Durchführung eine mehr oder weniger große Anzahl von Verfahrensschritten erforderlich ist, um ausgehend von der Probe des Patienten in der die betreffende Substanz nachgewiesen werden soll, schrittweise unter anderem durch Zugabe der markierten Antikörper oder Antigene, Entfernung überschüssiger Substanzen usw. zum Aufbau des oben erwähnten Komplexes, der die Markierung enthält, zu kommen.

Die Durchführung solcher Meßverfahren im labortechnischen Maßstab erfolgt in aller Regel nicht "individuell", d.h. durch sukzessive Verarbeitung eines einzelnen Probengefäßes, sondern es sind Durchsatzmengen von bis zu mehreren Hundert Probengefäßen üblich. Hier taucht folglich das Problem auf, daß also eine große Anzahl von Probengefäße, in der Regel Reagenzgläser, schnell und sicher, d.h. ohne Vertauschung der Reihenfolge, diese Verfahrenschritte durchlaufen, wobei eine mehrfache Umsetzung der Probengefäße zwischen den Verfahrensschritten zu den jeweiligen dafür vorgesehene Apparaturen und Einrichtungen und letztlich in das Meßgerät erforderlich wird.

Es ist daher üblich, die zur Durchführung einer solchen aus mehreren Verfahrensschritten bestehenden Messung verwendeten Probenbehälter (gegebenenfalls nach entsprechender Vorbehandlung) in einer Halterung ("Rack") aufzubewahren, mit dem möglichst viele Verfahrensschritte bewältigt werden können. Ein solches Rack besteht im einfachsten Fall aus einem Kunststoffständer mit beispielsweise 5 x 10 Bohrungen auf seiner Oberseite, in die die Probengefäße eingesteckt werden.

Um die eigentliche Messung an einer Mehrzahl von solchen Probenröhrchen vorzunehmen, ist in der US-A- 4,029,961 eine Vorrichtung zur sukzessiven Messung von radioaktiv markierten Proben beschrieben. Es handelt sich hierbei um eine Anlage nach dem "horizontalen Paternoster-Prinzip", bei dem eine Anzahl von Trägerelementen, die jeweils mehrere Probengefäße aufnehmen, nacheinander an der Meßstelle vorbeigezogen werden. Auf ein Trägerelement ist dabei ein Halter aufgesetzt, in dem mehrere Probengefäße in einer Reihe untergebracht sind. Die Probengefäße werden hierbei durch elastische Kunststoffzungen des Halters gehalten, bis sie die Meßposition erreichen. Dort geben die Kunststoffzungen das jeweilige auszumessende Probengefäß frei, das dann vertikal aus seinem Halter an die eigentliche Meßposition herausgeschoben wird Eine ähnliche Vorrichtung zeigt die DE- A- 25 29 071, bei der Kunststoffzungen den Boden der Probengefäße untergreifen. Infolge der notwendigen Entnahme der Probengefäße in ihrer Meßposition aus ihrem Halter ist dieser zwangsläufig konstruktiv aufwendig ausgeführt, und kann lediglich zusammen mit dem angepaßten Trägerelement verwendet werden.

Beim Einsatz dieses Aufnahmesystems bleibt daher das Problem der Umsetzung der Probengefäße von den Racks in die Halterungen bestehen, das sehr zeitaufwendig ist und bei dem Vertauschungen durch menschliches Versehen letztlich nicht auszuschließen sind, was insbesondere beim Einsatz solcher Meßverfahren im medizinischen Bereich unter Umständen zu schwerwiegenden Folgen für die betroffenen Patienten infolge einer Fehldiagnose führen kann.

Bei einer den Ausgangspunkt der Erfindung bildenden Vorrichtung (DE-A- 36 23 601) sind die Probengefäße in kettengliedartig aneinander gesetzte Halterungen eingesetzt, die kontinuierlich an der Meßstelle des Meßgerätes vorbeigefördert werden. Die Halterungen weisen hierbei seitliche Meßöffnungen auf, so daß die Probengefäße auch in ihrer jeweiligen Meßposition in den Halterungen verbleiben können, was gegenüber den oben geschilderten Anlagen zwar insoweit eine konstruktive Vereinfachung der Haltezungen erlaubt, die aber andererseits letztlich nicht realisiert werden kann, da die Halterungen selbst gleichzeitig auch als Trägerelement zur Durchführung der Probengefäße durch das Meßgerät ausgebildet sind und folglich konstruktiv entsprechend aufwendig gestaltet sein müssen. Das grundlegende Problem wird hierdurch folglich nicht gelöst, da auch hier die Probengefäße einzeln in diese Halterungen eingesetzt und nach der Messung auch wieder herausgenommen werden müssen, da die Halterungen einerseits zu aufwendig und daher zu teuer zum Wegwerfen sind, andererseits aber auch schwierig zu reinigen sind.

Eine Lösung, bei der die Probengefäße sowohl während der Messung an ihrem Platz verbleiben können, als auch ein separates Trägerelement Verwendung findet, auf das die Probergeräße aufsetzbar sind, zeigt die EP-A-039 145.

Die "Erleichterung", daß eine Entnahme von Probegefäßen zur Messung nicht erforderlich ist, wird bei dieser Lösung offenbar jedoch dahingehend umgesetzt, daß in jedem Halter einstückig 3x3 Küvetten integriert sind, so daß auch hier die Halter zwangsläufig nur in Verwendung mit dem spezifischen Meßgerät bzw. Trägerelement eingesetzt werden können. Darüberhinaus ist hier der genannte Vorteil dadurch bedingt, daß keine horizontale, sondern eine vertikale Messung im Meßgerät durchgeführt wird; abgesehen von grundsätzlichen Nachteilen dieser Meßmethode (langer Strahlungsweg, Streueffekte des Bodens der Probengefäße) ist hier die Zugabe von Reagenzien unmittelbar vor der Messung, also in der Meßposition, nicht möglich, da der Raum oberhalb der Öffnung der Probengefäße zwangsläufig vom Detektorkopf "belegt" ist. Diese Vorrichtung nach der EP-A-039 145 ist folglich für solche Messungen nicht brauchbar, wo eine solche Zugabe von Reagenzien erforderlich ist, also insbesondere für die einleitend beschriebenen Immunoassays, wo die Lumineszenz des Markers (labels) unmittelbar vor der Messung initiiert werden muß. Die daraus resultierende Notwendigkeit der horizontalen Messung (wozu die seitlichen Meßöffnungen bei der DE-A- 36 23 601 vorgesehen sind) gestattet auch nicht die Verwendung von matrixartig aufgebauten Haltern.

Die Anlage gemäß der EP-A-039 145 ist daher für Chemi- und Biolumineszenzmessungen nicht verwendbar.

Die DE-A-24 48 658 zeigt einen Halter für Probenbehälter, der sowohl zur Aufnahme mehrerer Probengefäße als auch zur Durchführung durch die Meßstelle bestimmt ist; ähnlich wie bei der oben erwähnten DE-A-36 23 601 hat diese "integrierte" Ausführung zur Folge, daß er konstruktiv aufwendig gestaltet sein muß und folglich auch hier die Probengefäße einzeln zur Messung eingesetzt und danach wieder entnommen werden müssen. Bei der Messung als solcher werden Proben aus den Probenröhrchen abgesaugt, es werden folglich keine Strahlungsmessungen durchgeführt. Da die Halter seitlich geschlossene Aufnahmekanäle für die Probengefäße aufweisen ("Aufnahmetaschen"; die dargestellten seitlichen Öffnungen ("Löcher") dienen nicht zur Messung der Proben, sondern ausschließlich zu Identifizierungszwecken einzelner Halter mittels einer optischen Leseeinrichtung), eignen sich diese Halter auch nicht für die Durchführung von Chemi- oder Biolumineszenzmessungen.

Aufgabe der Erfindung ist es daher, die Vorrichtung nach der DE-A-36 23 601 so weiterzubilden, daß die Sicherheit des gesamten Verfahrensablaufs bei bei einfachster Handhabung erhöht wird, indem nur ein einziger Halter für die Proben durch sämtliche Verfahrensschritte hindurch verwendet wird, in dem die Proben verbleiben, und der konstruktiv extrem einfach ausgebildet ist, so daß er am Ende der Messungen entsorgt werden kann.

Erfindungsgemäß wird diese Aufgabe durch den Patentanspruch 1 gelöst.

Der Grundgedanke der Erfindung besteht also in der konsequenten Teilung der Funktionen der Bauteile des vorbekannten Geräts der DE-A-36 23 601 in einem einfachen, nach einmaligem Gebrauch zu entsorgenden Halter und ein komplexeres, mehrfach verwendetes meßgerät-spezifisches Trägerelement. Letzteres erfüllt insbesondere alle diejenigen Anforderungen (Transportvorkehrungen, Fensteröffnungen usw.), die zur Durchführung der eigentlichen Messung erforderlich sind, wogegen der Halter, in dem die Probengefäße während sämtlicher Arbeitsgänge verbleiben, als "verlorenes" billiges Kunststoffteil ausgebildet sein kann, dessen Zweck lediglich die räumliche Zuordnung einer Anzahl von Probengefäßen ist, und das nach Beendigung der Messung gegebenenfalls zusammen mit den Probengefäßen weggeworfen werden kann, wobei wegen der Minimalausführung eines solchen Halters auch nur geringe Entsorgungsprobleme entstehen. In diesem Halter können die Probengefäße von Anfang an eingesetzt werden und auch dort verbleiben, so daß aufwendige Umsetzvorgänge, die Anlaß für Vertauschungen und Verwechslungen sein können, während der gesamten Arbeits- und Meßvorgänge zuverlässig vermieden werden.

Demgegenüber kann das Trägerelement spezifisch auf die jeweils im Meßgerät durchzuführende Messung abgestimmt werden, beispielsweise durch entsprechende Anordnung von Fensteröffnungen zur Emissions- oder auch Extinktionsmessung. Ein derart ausgebildetes Trägerelement kann beispielsweise bei einer Meßvorrichtung gemäß der oben erwähnten US-A-4 029 961 eingesetzt werden.

Ein derartiges Ausführungsbeispiel des erfindungsgemäßen Aufnahmesystems und seiner Handhabung wird anhand von Zeichnungen näher erläutert, es zeigen:
- Figur 1:: Eine Explosionsdarstellung des Ständers des Aufnahmesystems mit zugeordnetem Halter,
- Figur 2:: eine teilweise geschnittene Darstellung der Einzelheit X in Figur 1,
- Figur 3:: der Ständer gemäß Figur 1 mit mehreren aufgesetzten Haltern,
- Figur 4:: eine Explosionsdarstellung eines Trägerelementes mit zugeordnetem Halter und eingesetzten Probengefäßen,
- Figur 5:: eine perspektivische Darstellung der oberen Aufnahmeseite eines Meßgerätes mit einem Trägerelement, und
- Figur 6A-M: eine schematische Darstellung des Verfahrensablaufs bei einem Immunoassay unter Verwendung der Teile des erfindungsgemäßen Aufnahmesystems.

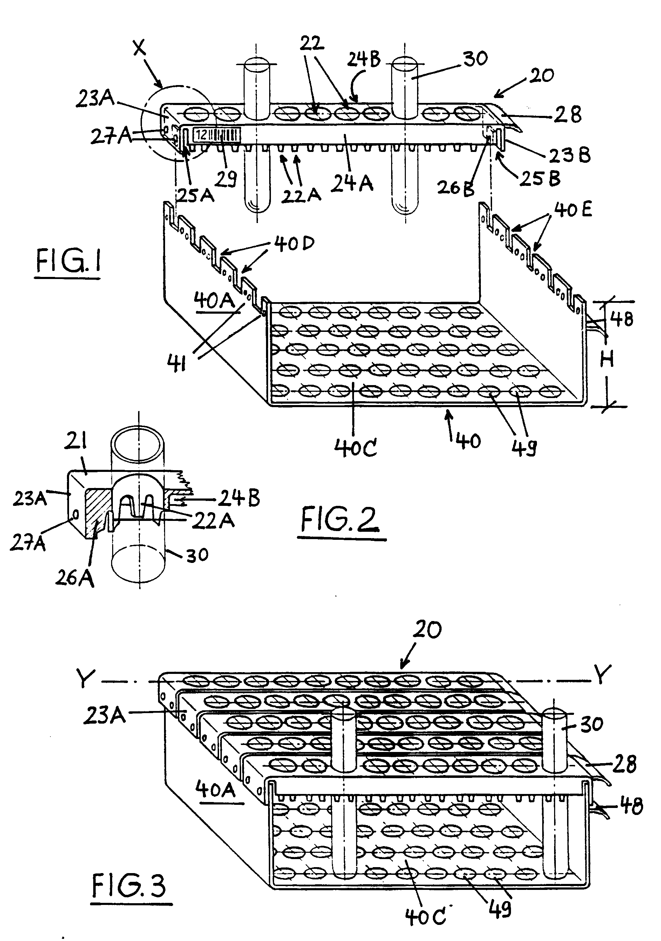

In Figur 1 sind zwei der drei wesentlichen Komponenten des Aufnahmesystems dargestellt, ein Halter 20 zur Aufnahme mehrerer Probengefäße 30 und ein Ständer 40 zur parallelen Aufnahme mehrerer solcher Halter 20 (Figur 3).

Ein Halter 20 besteht aus einem Kunststoffteil 21 mit beidseitig an seinen Längsseiten heruntergezogenen Seitenflächen 24A,24B und beidseitig an seinen Stirnseiten nach unten abgebogenen vertikalen Ansätzen 23A,23B, so daß der Halter 20 eine etwa wannenförmige Gestalt besitzt. An den Eckbereichen, also im Übergangsbereich zwischen den Seitenflächen 24A,24B und den vertikalen Ansätzen 23A,23B, sind vertikale Schlitze 25A,25B ausgespart. An einer Stirnseite ist ferner eine Griffleiste 28 angebracht.

Die Gestaltung der vertikalen Ansätze 23A,23B im einzelnen ist insbesondere aus Figur 2 entnehmbar. Symmetrisch zur Längsmittelachse Y-Y des Halters 20 weist jeder vertikale Ansatz 23A,23B in seinem unteren mittleren Bereich eine nach innen gerichtete Verdickung 26A,26B auf, beidseitig dieser Verdickung ist jeweils eine Vertiefung 27A,27B vorgesehen (27B auf der rechten Seite des Halters 20 in den Figuren nicht dargestellt).

Die beiden vertikalen Ansätze 23A,23B sind gleich lang ausgebildet; die sich bis zur unteren Kante der Ansätze erstreckenden Verdickungen 26A,26B sind verschieden breit ausgebildet (die Ansätze 26B schmaler als die Ansätze 26A).

Der Ständer 40 ist U-förmig ausgebildet, mit einem Bodenteil 40C und zwei parallelen Seitenteilen 40A,40B, deren oberer Bereich zur Aufnahme der Halter 20 speziell an diese angepaßt ist:

Zunächst sind am oberen Ende rechteckige Aussparungen 40D,40E vorgesehen, jeweils beidseitig davon Ansätze 41. Hierbei sind die Ausschnitte 40E im Seitenteil 40B weniger breit als die Ausschnitte 40D im linken Seitenteil 40A.

Am rechten Seitenteil 40B ist eine horizontale Griffleiste 48 angebracht.

Die Form der Ausschnitte 40D,40E ist derart auf die rückseitigen Verdickungen 26A,26B des Halters 20 abgestimmt, daß beim Aufsetzen eines Halters 20 auf den Ständer 40 die vertikalen Ansätze 23A,23B die Seitenteile 40A,40B außen übergreifen, wobei die Verdickungen 26A,26B dann schubladenähnlich und im wesentlichen formschlüssig in ein gegenüberliegendes Paar von Ausschnitten 40D,40E eingeschoben werden und in die stehen-gebliebenen, nicht ausgeschnittenen oberen Enden der Seitenteile in die Schlitze 25A,25B eintauchen, letzteres ist insbesondere aus Figur 3 deutlich entnehmbar. Hierbei rasten dann auch die Ansätze 41 in die zugeordneten Vertiefungen 27A,B ein (Schnappverbindung zwischen Halter 20 und Ständer 40).

Die oben erläuterte unterschiedliche Ausgestaltung der Verdickungen und zugehörigen Ausschnitte auf den beiden Seiten des Trägers und des Halters dienen dazu, die Symmetrie des Halters 20 gegenüber einer Mittelebene parallel zu den Seitenteilen 40A,40B des Ständers 40 aufzuheben, so daß der Halter 20 nur in einer definierten Position absolut horizontal, d.h. parallel zum Boden 40C auf den Ständer 40 aufgesetzt werden kann, wogegen bei einer Vertauschung (also bei einer Verdrehung des Halters um 180°) es zu einer leicht bemerkbaren Schräglage des Halters 20 auf dem Ständer 40 kommt, da die (breitere) innenseitige Verdickung 26A auf der linken Seite eines Halters 20 nicht in einen (engeren) Ausschnitt 40E im rechten Seitenteil 40B des Ständers 40 einschiebbar ist.

Um hier Irrtümer von vornherein zu vermeiden, sind die beiden Griffleisten 28,48 auf der gleichen Seite, im Ausführungsbeispiel auf der rechten Seite, vorgesehen, so daß die richtige Zuordnung der Halter 20 in den Ständer 40 auch ohne große Aufmerksamkeit seitens des Benutzers sofort erkennbar ist.

Diese Vorkehrungen bieten also eine doppelte Sicherung gegen einen möglicherweise falschen Einsatz von Haltern 20 in den Ständer 40. Dies muß unbedingt vermieden werden, da hierdurch eine Vertauschung der Reihenfolge der Probengefäße 30 im Halter 20 entstehen könnte, was für das Meßergebnis und damit für die betroffenen Patienten schwerwiegende Folgen haben könnte.

Da in Abhängigkeit vom jeweils angewandten Immunoassay und der beim Benutzer vorhandenen Ausstattung für die einzelnen Arbeitsgänge eine mehrfache Entnahme und ein mehrfaches Wieder-einsetzen der Halter 20 in den Ständer 40 erforderlich sein kann, ist dieses doppelte Sicherheitssystem von besonderer Bedeutung.

Zur zusätzlichen Sicherung und zur Identifizierung der Proben ist an der Seitenfläche 24A des Halters 20 ein Markierungsstreifen, beispielsweise ein Bar-Code aufgebracht.

Zur Halterung der Probengefäße 30 im Halter 20 sind die Öffnungen 22 auf der Oberseite des Halters 20 mit nach unten zeigenden, elastischen Kunststoffzungen 22A versehen, die im unbelasteten Zustand (also ohne eingeschobenes Probengefäß 30) nach innen zeigen, d.h., auf einem Kegelstumpfmantel liegen, dessen Achse senkrecht zur Oberseite des Kunststoffteils 21 liegt. Je nach Außendurchmesser des eingeführten Probengefäßes 30 werden diese elastischen Kunststoffzungen 22A dabei mehr oder weniger nach außen weggespreizt, so daß ein Reibschluß zwischen diesen Zungen 22A einerseits und dem Probengefäß 30 andererseits entsteht, der stark genug ist, daß der Halter 20 mit den eingesetzten Probengefäßen 30 transportiert werden kann, ohne daß diese ihre vertikale Position im Halter 20 verändern. Darüberhinaus haben diese Kunststoffzungen 22A auch noch einen zentrierenden Effekt auf die Probengefäße 30 insofern, als sie eine genaue vertikale Ausrichtung der Probengefäße sicherstellen. Beide Eigenschaften sind insbesondere auch von Bedeutung, wenn der Halter 20 mit den Probengefäßen in das weiter unten erläuterte Trägerelement 10 eingeführt wird.

Schließlich sind im Boden 40C Vertiefungen oder Bohrungen 49 eingebracht, so daß unterhalb jeder Öffnung 22 eine Bohrung 49 zu liegen kommt. Der Durchmesser der Bohrungen 49 verjüngt sich nach unten, so daß auch Probengefäße 30 unterschiedlichen Durchmessers eine ausreichende seitliche Fixierung erfahren.

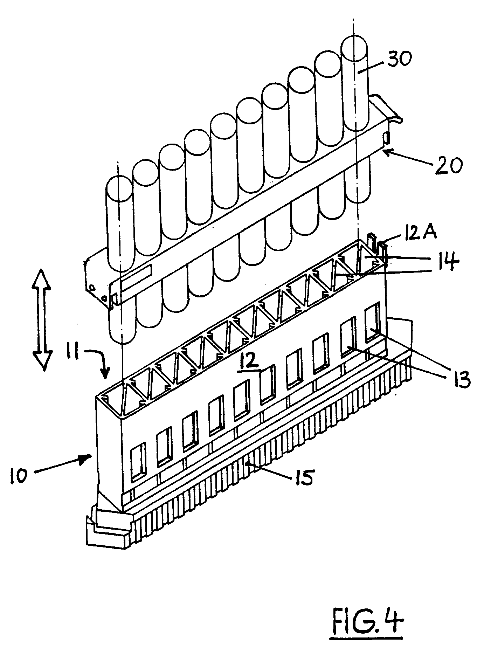

Für das Zusammenwirken mit diesem Trägerelement 10 ist weiterhin von Bedeutung die Höhe H der Seitenteile 40A,40B des Ständers 40: Diese Höhe H ist so bemessen, daß bei aufgesetztem Halter 20 gemäß Figur 3 und bei bis zum Boden 40C in die Bohrungen 49 durchgeschobenen Probengefäßen 30 diese eine vertikale Position im Halter 20 erreichen, die gleichzeitig auch sicherstellt, daß beim Aufsetzen des Halters 20 auf das Trägerelement 10 (Figur 4) die Probengefäße ordnungsgemäß relativ zu den Meßöffnungen 13 positioniert sind. Der Boden 40C des Ständers 40 bzw. die Bohrungen 49 dient also auch als "Anschlag" für die ordnungsgemäße Einführung der Probengefäße 30 in die Halter 20. Außer diesem Zentriereffekt erleichtern die Bohrungen 49 auch den Ablauf von Flüssigkeiten aus dem Ständer, beispielsweise nach dem Entnehmen aus einem Wasserbad.

Die dritte Komponente des erfindungsgemäßen Aufnahmesystems, das Trägerelement 10, ist in Figur 4 zusammen mit einem Halter 20 mit eingesetzten Probengefäßen 30 dargestellt. Dieses Trägerelement 10 besteht im wesentlichen aus einem Kunststoffgehäuse 12, das durch Querwandungen unterteilt ist, so daß vertikale, parallele Aufnahmekanäle 14 gebildet werden, deren Abstand so bemessen ist, daß ein Halter 20 auf das Gehäuse 12 aufgesetzt werden kann und die Probengefäße 30 hierbei in das Innere des Gehäuses 12 eintauchen. Eine Stirnseite des Gehäuses 12 ist dabei so ausgebildet, daß sie nur mit einer zugehörigen Stirnseite des Halters 20 zusammenwirkt, derart, daß der Halter 20 mit den Probengefäßen 30 nur in dieser definierten Positionierung in das Trägerelement 10 eingeschoben werden kann. Dies kann beispielsweise durch einen hakenförmigen Ansatz 12A bewirkt werden, in den der vertikale Ansatz 23B des Halters 20 vollständig eintaucht, wogegen der vertikale Ansatz 23A des Halters 20 nicht vollständig einführbar ist, so daß es hier ebenfalls zu einer für das Bedienungspersonal erkennbaren Fehlpositionierung des Halters 20 kommt, wenn ein Halter 20 falsch aufgesetzt wird.

In einer oder beiden Seitenwandungen des Gehäuses 12 sind abhängig von der Art der durchzuführenden Messung (zwei gegenüberliegende Meßöffnungen sind beispielsweise erforderlich für Extinktions-oder Fluoreszenzmessungen) Meßöffnungen 13 eingebracht (jeweils eine Meßöffnung 13 pro Aufnahmekanal 14). Wenn, wie oben erläutert, die Probengefäße 30 ordnungsgemäß bis zum "Anschlag", d.h. bis zum Boden 40C des Ständers 40, eingestreckt wurden, dann nehmen die Probengefäße 30 ihre zur Messung vorgesehene Endposition innerhalb der Aufnahmekanäle 14 ein, wenn der Halter 20 ordnungsgemäß auf das Gehäuse 12 aufgesetzt ist.

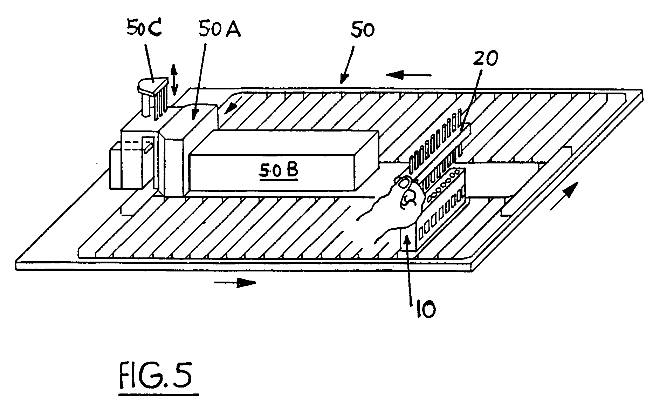

Das Trägerelement dient zum Transport der Probengefäße 30 durch die Meßstelle und weist hierzu gemäß der dargstellten bevorzugten Ausführungsform in seinem unteren Bereich Verzahnungen 15 auf, die in Eingriff mit einem Zahnriemen einer Antriebseinheit jedes Meßgerätes 50 (Figur 5) gebracht werden können, so daß ein kontinuierlicher Transport des Trägerelementes 10 durch die Meßstelle 50A des Meßgerätes 50 vorgenommen werden kann. Insbesondere die Gestaltung des Trägerelementes 10 in diesem unteren Bereich (beispielsweise mit dreieckförmigen Stirnseiten) ist aus der genannten US-A-4 029 961 entnehmbar, in dem auch die mechanischen Vorrichtungen zum Transport mehrerer solcher Trägerelemente beschrieben sind, so daß dieser Mechanismus hier nicht näher erläutert zu werden braucht.

Zur Verdeutlichung ist die Oberseite eines solchen Meßgerätes 50 nochmals dargestellt, wobei lediglich ein Trägerelement 10 gezeigt ist, in das gerade ein Halter 20 mit Probengefäßen 30 eingesetzt wird. Dieses Trägerelement läuft dann in Richtung der Pfeile auf dem Meßgerät um und passiert hierbei die eigentliche Meßstelle 50A, in der insbesondere ein Fotomultiplier zum Nachweis der Chemilumineszenz enthalten ist, sowie eine Injektionsvorrichtung 50C, mit deren Hilfe das die Chemilumineszenz initiierende Reagenz in die Probengefäße 30 injiziert wird. Ein Gehäuse 50B deckt hierbei die mechanischen Antriebsvorrichtungen (Motor, Zahnriemen, Führungsrollen) sowie gegebenenfalls noch einen Teil des Fotomultipliers ab.

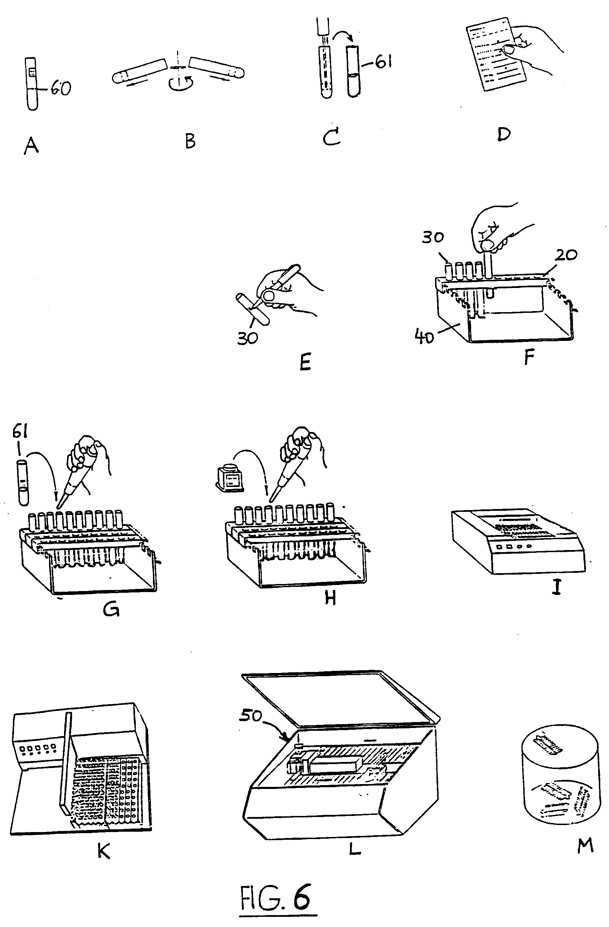

In Figur 6 ist schematisch ein Verfahrensablauf unter Verwendung der oben im einzelnen beschriebenen erfindungsgemäßen Komponenten (Halter 20, Ständer 40 und Trägerelement 10) dargestellt, wie er für die Durchführung eines Immunoassays typisch ist:

In einem Reagenzglas 60 befindet sich beispielsweise die von einem Patienten entnommene Blutprobe, in der die interessierende Substanz nachgewiesen werden soll (A). In einer Zentrifugierstation wird das zur Messung benutzte Serum, das den Analyten enthält, von den Blutkörperchen getrennt (B) und das Serum wird entnommen (C).

Die Serumprobe wird meist als Primärprobe (61) zur Verteilung auf mehrere Probengefäße für unterschiedliche Untersuchungen zwischengelagert.

Auf einem Datenträger werden die relevaten Daten, wie zum Beispiel der Name des Patienten, Art der Untersuchung usw. festgehalten (Dokumentation D).

Zur Durchfuhrung des Immunoassays werden handelsübliche Probengefäße 30 verwendet, die in Übereinstimmung mit der Dokumentation mit einer Kurzidentifizierung versehen werden (E). Die hierbei verwendeten Probengefäße 30 können bei bestimmten Immunoassays bereits mit einer Antikörper-Innenbeschichtung versehen sein, die spezifisch für den nachzuweisenden Analyten ist.

Die gegebenenfalls vorbereiteten und beschrifteten Probengefäße werden dann nacheinander in die auf einem Ständer 40 aufgesetzten Halter 20 eingeführt und bis zum Boden des Ständers 40 durchgeschoben (F), wo ihr Boden in die Bohrungen 49 des Bodens 40 eintaucht. Als Alternative können die Probenröhrchen bereits beim Hersteller der Diagnostika in die Halter eingestellt werden. In diesem Fall können die Rohrohen sehr leicht beschriftet werden, ohne daß sie dazu aus dem Halter entnommen und nach der Beschriftung wieder eingestellt werden müssen.

Daraufhin wird das aus der Primärprobe entnommene, den Analyten enthaltende Serum in eines der Probengefäße eingefüllt (G), sodann die nächste Patientenprobe usw., bis zum Beispiel alle Probenröhrchen die Patientenprobe enthalten. Anschließend werden die Reagenzien, also im Falle des Immunoassay die markierten Antikörper oder Antigene, zupipettiert (H). Dies kann entweder erfolgen, während sich die Proben im Rack befinden oder man entnimmt jeweils einen Halter nach dem anderen zur Reagenzienzugabe und stellt ihn danach wieder in den Ständer.

Anschließend wird der entsprechend mit Haltern belegte Ständer 40 in einen Inkubator eingesetzt, in dem gegebenenfalls unter erhöhter Temperatur die erwünschte Antigen-Antikörper-Reaktion erfolgt (I). Hierzu kann es erforderlich sein, daß zur Beschleunigung dieses Ablaufs die Ständer mit den Haltern geschüttelt werden müssen.

Da zum ordnungsgemäßen Ablauf des Immunosssays bei den beteiligten Substanzen überschüssige Bestandteile entfernt werden müssen, werden die Ständer mit den Haltern danach in ein Waschgerät eingesetzt (K). Sofern ein solches im Labor nicht vorhanden ist, können die Probengefäße mit Reinigungsreagenz gefüllt und das gesamte Probenrack (Ständer + Gläser) dekantiert werden. Auch dieser Arbeitsgang kann unter Umständen mehrfach erforderlich sein.

Die so vorbereiteten Probengefäße werden dann Halter für Halter jeweils in ein im eigentlichen Meßgerät 50 umlaufendes Trägerelement eingesetzt und passieren dann die Meßstelle, wo die die Chemilumineszenz initiierenden Substanzen zugegeben und die daraus resultierende Lichtausbeute gemessen wird, deren Intensität ein Maß für die Menge der nachzuweisenden Substanz im Analyten bildet (L).

Danach werden die Halter mit den ausgemessenen Probengefäßen wieder aus ihrem zugehörigen Trägerelement entnommen und weggeworfen (M).

In letzterem ist eine Besonderheit insofern zu sehen, als im Gegensatz zu vorbekannten Verfahren auch der Halter 20 zusammen mit den Probengefäßen weggeworfen werden kann, was eine beträchtliche Vereinfachung und Einsparung weiterer Verfahrensschritte darstellt.

Von Bedeutung ist weiterhin, daß durch die feste Halterung der Probengefäße im Probenrack auch eine sichere gemeinsame Handhabung ermöglicht wird, beispielsweise beim Schütteln oder Dekantieren, ohne einzelne Probengefäße oder Halter entnehmen zu müssen.

Beonders vorteilhaft ist es, wenn die Probenröhrchen, zum Beispiel mit Beschichtung, bereits vom Diagnostikahersteller in Haltern geliefert werden, da sie dann durchgängig von der Probenvorbereitung über die Messung bis zur Entsorgung in den Haltern verbleiben können.

Bei Immunosssays ist es auch üblich, Antigene oder Antikörper an in Suspension befindliche magnetische (meist paramagnetische) Teilchen zu binden. Zur Trennung von gebundenen und freien Reagenzien werden die in Suspension befindlichen Teilchen von externen Magneten an die Innenseite der Probengefäße gezogen, und in diesem Zustand kann die Flüssigkeit mit den nichtgebundenen Reagenzien durch Aspirieren oder Dekantieren aus den Probenröhrchen entfernt werden, während die magnetischen Teilchen im Röhrchen verbleiben.

Das erfindungsgemäße Konzept des modularen Racks, bestehend aus Halter und Ständer, kann auch bei der Verwendung von magnetischen Teilchen vorteilhaft angewendet werden. Es muß nur vorgesehen werden, daß die Probengefäße zum Bewirken der Trennung sowie beim eigentlichen Trennschritt selbst im Einflußbereich magnetischer Felder stehen müssen, während andererseits, z. B. bei Inkubationsphasen, das magnetische Feld nicht einwirken soll. Der Ständer kann daher in bekannter Weise auch so ausgebildet werden bzw. mit einer offenen Bodenfläche, daß er auf einen Unterbau gestellt werden kann, welcher Magnete enthält, die nach Aufsetzen des modularen Racks das zur Trennung erforderliche magnetische Feld auf die in der Suspension befindlichen Magnetpartikel ausüben. Die Magnete, im allgemeinen Permanentmagnete, sind dabei so angeordnet, daß sie die magnetischen Teilchen entweder an den Boden oder, im unteren Bereich, an die Seiten der Probengefäße ziehen.

Zum Dekantieren wird dann die Kombination aus Halter, Ständer und Unterbau als Einheit umgekippt.

Danach kann die Kombination aus Halter und Ständer wieder vom Unterbau gelöst und beispielsweise Waschflüssigkeit zugegeben werden. Danach kann die Kombination Halter und Ständer erneut auf den Unterbau aufgesetzt, das Absetzen der magnetischen Teilchen an der Wand abgewartet und sodann erneut dekantiert werden.

## Patentansprüche

1. Vorrichtung zur Aufnahme von mehreren Probengefäßen zur Durchführung von Strahlungsmessungen in einem Meßgerät, in dem die Probengefäße (30) in einem meßgerät-spezifischen Trägerelement (10) nacheinander an der Meßstelle vorbeigeführt werden, wobei mehrere Probengefäße (30) in einer Reihe in einem Halter (20) untergebracht sind, der als bügelähnliches Wegwerfbauteil aus Kunststoff ausgebildet ist, mit mehreren Öffnungen in seiner Längsachse zur reibschlüssigen Aufnahme der Probengefäße (30) versehen ist und der auf das Trägerelement (10) aufsetzbar ist,
und wobei das Trägerelement (10) aus einem Gehäuse (12) besteht, das auf seiner Oberseite (11) mündende, vertikale Aufnahmekanäle (14) aufweist, in die die Probengefäße (30) im Halter (20) eintauchen, bis sie in ihrer Endposition jeweils mindestens einer seitlichen Meßöffnung (13) in jedem Aufnahmekanal (14) gegenüberliegen, sodaß die Probengefäße während sämtlicher Arbeitsvorgänge einschließlich der Messung in ihrem Halter (20) verbleiben können.

2. Vorrichtung nach Anspruch 1, dadurch gekennzeichnet, daß das Gehäuse (12) in seinen unteren Seitenbereichen Verzahnungen (15) zum Zusammenwirken mit einem Zahnriemen einer Antriebseinrichtung des Meßgeräts (50) aufweist.

3. Vorrichtung nach Anspruch 1, dadurch gekennzeichnet, daß die Öffnungen (22) mit nach unten zeigenden, elastischen Kunststoffzungen (22A) versehen sind, die in unbelastetem Zustand (ohne Probengefäß) auf einem Kegelstumpfmantel liegen, dessen Achse senkrecht zur Oberseite des Kunststoffteils (21) liegen, und die bei Einfuhrung eines Probengefäßes (30) gespreizt werden.

4. Vorrichtung nach Anspruch 1, dadurch gekennzeichnet, daß das Kunstoffteil (21) an seinen Stirnenden einen vertikalen Ansatz (23A,23B) aufweist.

5. Vorrichtung nach Anspruch 1, dadurch gekennzeichnet, daß das Kunstoffteil (21) in der Ebene senkrecht zu seiner Längsachse (Y-Y) einen U-förmigen Querschnitt besitzt.

6. Vorrichtung nach Anspruch 4 und Anspruch 5, dadurch gekennzeichnet, daß zwischen den vertikalen Ansätzen (23A,23B) und den Seitenflächen (24A,24B) ein vertikaler Schlitz (25A..D) ausgebildet ist.

7. Vorrichtung nach Anspruch 4, dadurch gekennzeichnet, daß der vertikale Ansatz (23A,B) in seinem unteren mittleren Bereich eine nach innen gerichtete Verdickung (26A,26B) aufweist.

8. Vorrichtung nach Anspruch 7, dadurch gekennzeichnet, daß beidseitig der Verdickung (26A,26B) je eine Vertiefung (27A, 27B) vorgesehen ist.

9. Vorrichtung nach Anspruch 1, Anspruch 4 - Anspruch 7, dadurch gekennzeichnet, daß zur Aufnahme mehrerer Halter (20) außerhalb des Meßgerätes (50) ein Ständer (40) mit U-förmigem Querschnitt vorgesehen ist, dessen vertikale Seitenteile (40A,40B) an ihrem oberen Ende rechteckige Ausschnitte (40D,E) aufweist, deren Abstand und Querschnitt so bemessen ist, daß mehrere Halter (20) parallel zueinander auf den Ständer (40) gesetzt werden können, wobei deren Verdickungen (26A,26B) an den vertikalen Ansätzen (23A,23B) in die Ausschnitte (40D,E) eingreift, wenn die vertikalen Ansätze (23A, 23B) die Seitenteile (40A,40B) außen übergreifen und die Seitenteile (40A,40B) in die Schlitze (25A,B) eintauchen.

10. Vorrichtung nach Anspruch 1 und Anspruch 9 , dadurch gekennzeichnet, daß die Höhe (H) der Seitenteile (40A,40B) so bemessen ist, daß die Endposition der in die Halter (20) eingesetzten Probengefäße (30), wenn diese auf dem Boden (40C) des Ständers (40) aufsitzen, innerhalb des Halters (20) derart ist, daß sie beim Aufsetzen des Halters (20) auf das Trägerelement (10) so weit in die Aufnahmekanäle (14) eintauchen, daß sie ihre dort definierte Endposition relativ zu den seitlichen Meßöffnungen (13) einnehmen.

11. Vorrichtung nach Anspruch 8 und Anspruch 9 , dadurch gekennzeichnet, daß korrespondierend zu den Vertiefungen (27A,27B) in den vertikalen Ansätzen (23A,23B) der Halter (20) beidseitig der Ausschnitte (40D,E) in den Seitenteilen (40A,40B) Ansätze (41) ausgebildet sind, so daß eine Rastverbindung zwischen Halter (20) und Ständer (40) ausgebildet ist.

12. Vorrichtung nach Anspruch 1, dadurch gekennzeichnet, daß der Halter (20) zumindest auf einer Seite eine Griffleiste (28) aufweist.

13. Vorrichtung nach Anspruch 9 , dadurch gekennzeichnet, daß der Ständer (40) zumindest auf einer Seite eine Griffleiste (48) aufweist.

14. Vorrichtung nach einem der vorhergehenden Ansprüche, dadurch gekennzeichnet, daß die zusammerwirkenden Bereiche von Halter (20) und Ständer (40) soweit unsymmetrisch bezüglich der zu den Seitenteilen parallelen Mittelebene ausgebildet sind, daß eine parallele Positionierung des Halters (20) zum Boden (40C) des Ständers(40) nur bei einer Einsetz-Position erreicht wird.

15. Vorrichtung nach Anspruch 7, 9, 14, dadurch gekennzeichnet, daß die Verdickungen (26A,B) und die zugehörigen Ausschnitte (40C,40D) paarweise (26A,40C bzw. 26B,40D) korrespondierend ausgebildet sind.

16. Vorrichtung nach Anspruch 5 und Anspruch 6, dadurch gekennzeichnet, daß auf den Seitenflächen (24A, 24B) ein Identifizierungsteil (29), beispielsweise in Form eines bar-code-Streifens, aufgebracht ist.

17. Vorrichtung nach Anspruch 9 , dadurch gekennzeichnet, daß der Boden (40C) des Ständers (40) Bohrungen (49) aufweist, die jeweils unterhalb einer Öffnung (22) der eingesetzten Halter (20) liegen.

18. Vorrichtung nach Anspruch 17, dadurch gekennzeichnet, daß der Querschnitt der Bohrungen (49) sich nach unten verjüngt.

## Claims

1. Device for receiving a plurality of sample containers for carrying out radiation measurements in a measuring apparatus, in which the sample containers (30) are conducted past the measuring location one after the other in a carrying means (10) specific to the measuring apparatus, a plurality of sample containers (30) being accommodated in a row in a holder (20), which is adapted as a clamp-like disposable component part formed from plastics material, provided with a plurality of openings in its longitudinal axis for the friction-locking reception of the sample containers (30) and is mountable on the carrying means (10), the carrying means (10) comprising a housing (12), which has vertical receiving channels (14) terminating at its upper end (11), into which channels the sample containers (30) in the holder (20) are inserted until, in their end position, they each lie opposite at least one lateral measuring opening (13) in each receiving channel (14), so that the sample containers may remain in their holder (20) during all of the operational procedures, including the measuring process.

2. Device according to claim 1, characterised in that the housing (12) has teeth (15) in its lower lateral regions for co-operating with a toothed belt of a mechanism for driving the measuring apparatus (50).

3. Device according to claim 1, characterised in that the openings (22) are provided with downwardly orientated, resilient plastics material projection members (22A), which lie on a frustoconical surface in the unloaded state (without sample container), have an axis lying perpendicular to the upper end of the plastics material part (21), and are splayed apart when a sample container (30) is introduced.

4. Device according to claim 1, characterized in that the plastics material part (21) has a vertical extension member (23A, 23B) at its leading ends.

5. Device according to claim 1, characterised in that the plastics material part (21) has a U-shaped cross-section in the plane perpendicular to its longitudinal axis (Y-Y).

6. Device according to claim 4 and claim 5, characterised in that a vertical slot (25A..D) is provided between the vertical extension members (23A, 23B) and the lateral faces (24A, 24B).

7. Device according to claim 4, characterized in that the vertical extension member (23A, B) has an inwardly orientated thickened portion (26A, 26B) in its lower central region.

8. Device according to claim 7, characterized in that a recessed portion (27A, 27B) is provided on each side of the thickened portion (26A, 26B).

9. Device according to claim 1, claim 4 - claim 7, characterized in that, in order to receive a plurality of holders (20), a support structure (40) having a U-shaped cross-section is provided externally of the measuring apparatus (50), the vertical lateral portions (40A, 40B) of said support structure having at their upper end rectangular cutaway portions (40D, E), the spacing therebetween and the cross-section thereof being so dimensioned that a plurality of holders (20) may be placed on the support structure (40) parallel to one another, the thickened portions (26A, 26B) at the vertical extension members (23A, 23B) of said holders engaging in the cutaway portions (40D, E) when the vertical extension members (23A, 23B) engage externally over the lateral portions (40A, 40B) and when the lateral portions (40A, 40B) descend into the slots (25A, B).

10. Device according to claim 1 and claim 9, characterized in that the height (H) of the lateral portions (40A, 40B) is so dimensioned that the end position of the sample containers (30) inserted into the holders (20), when said containers rest on the base (40C) of the support structure (40), internally of the holder (20) is such that they descend into the receiving channels (14), upon the holder (20) being placed on the carrying means (10), to such an extent that they assume their end position, defined there, relative to the lateral measuring openings (13).

11. Device according to claim 8 and claim 9, characterized in that extension members (41) are provided on each side of the cutaway portions (40D, E) in the lateral portions (40A, 40B) so as to correspond to the recessed portions (27A, 27B) in the vertical extension members (23A, 23B) of the holders (20), so that a locking connection is provided between holder (20) and support structure (40).

12. Device according to claim 1, characterized in that the holder (20) has a gripper bar (28) on at least one side.

13. Device according to claim 9, characterized in that the support structure (40) has a gripper bar (48) on at least one side.

14. Device according to one of the preceding claims, characterized in that the co-operating regions of holder (20) and support structure (40) are provided in such an unsymmetrical manner relative to the central plane parallel to the lateral portions that the holder (20) is only positioned parallel to the base (40C) of the support structure (40) in an inserted position.

15. Device according to claims 7, 9, 14, characterized in that the thickened portions (26A, B) and the associated cutaway portions (40D, 40E) are adapted to correspond in pairs (26A, 40D and 26B, 40E respectively).

16. Device according to claim 5 and claim 6, characterized in that an identification means (29), for example in the form of a bar code strip, is attached to the lateral faces (24A, 24B).

17. Device according to claim 9, characterized in that the base (40C) of the support structure (40) has bores (49) which each lie beneath a respective opening (22) in the inserted holders (20).

18. Device according to claim 17, characterized in that the cross-section of the bores (49) tapers downwardly.

## Revendications

1. Dispositif destiné à recevoir plusieurs récipients à échantillon pour l'exécution de mesures de rayonnement dans un appareil de mesure dans lequel les récipients à échantillon (30), dans un élément de support (10) propre à l'appareil, passent l'un après l'autre à l'emplacement de mesure, plusieurs récipients à échantillon (30) étant placés en un rang dans un support (20) constitué d'un élément à usage unique en plastique du genre étrier, pourvu sur son axe longitudinal de plusieurs ouvertures destinées à recevoir avec friction les récipients à échantillon (30) et pouvant être posé sur l'élément de support (10), et l'élément de support (10) étant constitué d'une boîte (12) qui présente des canaux récepteurs verticaux (14) débouchant sur sa face supérieure (11) dans lesquels les récipients à échantillon (30) placés dans le support (20) plongent jusqu'à ce que, dans leur position finale, ils soient chacun en face d'au moins une ouverture latérale de mesure (13) faite dans chaque canal récepteur (14), de sorte que les récipients à échantillon peuvent rester dans leur support (20) pendant toutes les opérations, y compris la mesure.

2. Dispositif selon la revendication 1, caractérisé par le fait que la boîte (12) présente dans ses zones latérales inférieures des dentures (15) destinées a coopérer avec une courroie dentée d'un dispositif moteur de l'appareil de mesure (50).

3. Dispositif selon la revendication 1, caractérisé par le fait que les ouvertures (22) sont pourvues de languettes en plastique élastiques (22A) dirigées vers le bas qui, a l'état non chargé (sans récipient à échantillon), se trouvent sur la surface latérale d'un tronc de cône dont l'axe est perpendiculaire à la face supérieure de la partie en plastique (21) et qui s'écartent lors de l'introduction d'un récipient à échantillon (30).

4. Dispositif selon la revendication 1, caractérisé par le fait que la partie en plastique (21) présente à ses extrémités frontales un appendice vertical (23A, 23B).

5. Dispositif selon la revendication 1, caractérisé par le fait que la partie en plastique (21) a dans le plan perpendiculaire à son axe longitudinal (Y-Y) une section en U.

6. Dispositif selon les revendications 4 et 5, caractérisé par le fait qu'entre les appendices verticaux (23A, 23B) et les faces latérales (24A, 24B) est faite une fente verticale (25A à 25D).

7. Dispositif selon la revendication 4, caractérisé par le fait que l'appendice vertical (23A, 23B) présente dans sa partie médiane inférieure un épaississement dirigé vers l'intérieur (26A, 26B).

8. Dispositif selon la revendication 7, caractérisé par le fait que de chaque côté de l'épaississement (26A, 26B) est prévu un creux (27A, 27B).

9. Dispositif selon la revendication 1 et les revendications 4 à 7, caractérisé par le fait que pour la réception de plusieurs supports (20) en dehors de l'appareil de mesure (50) est prévu un râtelier (40) à section en U dont les parties latérales verticales (40A, 40B) présentent à leur extrémité supérieure des échancrures rectangulaires (40D, 40E) dont l'espacement et la section sont tels que plusieurs supports (20) puissent être posés parallèlement les uns aux autres sur le râtelier (40), les épaississements (26A, 26B) de ceux-ci faits sur les appendices verticaux (23A, 23B) s'engageant dans les échancrures (40D, 40E) lorsque les appendices verticaux (23A, 23B) coiffent extérieurement les parties latérales (40A, 40B) et celles-ci plongent dans les fentes (25A, 25B).

10. Dispositif selon les revendications 1 et 9, caractérisé par le fait que la hauteur (H) des parties latérales (40A, 40B) est telle la position finale dans le support (20) des récipients à échantillon (30) placés dans celui-ci, lorsque ceux-ci reposent sur le fond (40C) du râtelier (40), est telle que ceux-ci, lors de la pose du support (20) sur l'élément de support (10), plongent dans les canaux récepteurs (14) jusqu'à une profondeur telle qu'ils prennent leur position finale par rapport aux ouvertures latérales de mesure (13) définie à cet endroit.

11. Dispositif selon les revendications 8 et 9, caractérisé par le fait que de façon correspondant aux creux (27A, 27B) des appendices verticaux (23A, 23B) des supports (20), de chaque côté des échancrures (40D, 40E) des parties latérales (40A, 40B) sont faits des appendices (41), de sorte qu'un encliquetage a lieu entre les supports (20) et le râtelier (40).

12. Dispositif selon la revendication 1, caractérisé par le fait que le support (20) présente au moins sur un côté une barrette de préhension (28).

13. Dispositif selon la revendication 9, caractérisé par le fait que le râtelier (40) présente sur au moins un côté une barrette de préhension (48).

14. Dispositif selon l'une des revendications précédentes, caractérisé par le fait que les parties coopérantes du support (20) et du râtelier (40) sont dissymétriques relativement au plan médian parallèle aux parties latérales de façon suffisante pour qu'un positionnement parallèle du support (20) par rapport au fond (40C) du râtelier (40) ne soit obtenu que pour une seule position d'introduction.

15. Dispositif selon les revendications 7, 9 et 14, caractérisé par le fait que les épaississements (26A, 26B) et les échancrures associées (40E, 40D) sont faits deux à deux (26A, 40D et 26B, 40E) de manière correspondante.

16. Dispositif selon les revendications 5 et 6, caractérisé par le fait que sur les faces latérales (24A, 24B) est appliqué un élément d'identification (29), par exemple une bande à code à barres.

17. Dispositif selon la revendication 9, caractérisé par le fait que le fond (40C) du râtelier (40) présente des trous (49) situés chacun sous une ouverture (22) des supports (20) en place

18. Dispositif selon la revendication 17, caractérisé par le fait que la section des trous (49) diminue vers le bas.
